# DEMANDE DE BREVET EUROPEEN

(11) **EP 4 620 362 A1**
(43) Date de publication de la demande: **24.09.2025**
(21) Numéro de dépôt: 25158319.1
(22) Date de dépôt: 17.02.2025
(51) Int. Cl.: A47J 37/06

(54) **APPAREIL À RACLETTE ÉQUIPÉ D'UNE PLAQUE DE CUISSON**

(30) Priorité: 19.03.2024 FR 2402743
(71) Demandeur: SEB S.A., 69130 Ecully (FR)
(72) Inventeur: CHAPPEL, Valérie, 69134 Ecully Cedex (FR); KOSE, Torun, 69134 Ecully Cedex (FR); PERRIER, Jean-Christophe, 69134 Ecully Cedex (FR)
(74) Mandataire: Germain Maureau

(57) **Abrégé**

L'appareil à raclette (1) comprend une sole (3) configurée pour recevoir des coupelles de cuisson ; une résistance électrique chauffante (5) disposée au-dessus et à distance de la sole (3) ; et une plaque de cuisson (6) configurée pour recouvrir au moins en partie la résistance électrique chauffante (5), la plaque de cuisson (6) comprenant une face inférieure orientée vers la sole (3) et une face supérieure comprenant une surface de cuisson (7). La face inférieure de la plaque de cuisson (6) comporte une surface de réflexion (12) présentant une émissivité comprise entre 0,60 et 0,80, la surface de réflexion (12) étant configurée pour réfléchir une partie d'un rayonnement thermique émis par la résistance électrique chauffante (5) vers la sole (3).

## Description

### Domaine technique

La présente invention concerne de manière générale un appareil de cuisson électrique pour la cuisson de produits alimentaires, et plus particulièrement un appareil à raclette.

### Etat de la technique

De façon connue, un appareil à raclette comprend :
- un socle configuré pour reposer sur une surface de travail,
- une sole fixée au socle et configurée pour recevoir des coupelles de cuisson destinées chacune à recevoir au moins un aliment à cuire,
- une résistance électrique chauffante qui est disposée au-dessus et à distance de la sole et qui est configurée pour être située au moins en partie au-dessus des coupelles de cuisson lorsque les coupelles de cuisson reposent sur la sole, et
- une plaque de cuisson configurée pour recouvrir au moins en partie la résistance électrique chauffante, la plaque de cuisson comprenant une face inférieure qui est orientée vers la sole et une face supérieure comprenant une surface de cuisson configurée pour recevoir et chauffer un aliment à cuire.

Afin d'assurer d'une part une cuisson optimale d'aliments disposés sur la surface de cuisson et d'autre part la fonte du fromage contenu dans les différentes coupelles de cuisson, un appareil à raclette du type précité présente une puissance électrique élevée, et généralement supérieure à 800W, voire supérieure à 1000W pour les appareils à raclette dont la sole est apte à recevoir simultanément huit coupelles de cuisson.

Ainsi, la consommation électrique d'un tel appareil à raclette est relativement élevée en raison de la nécessité de chauffer et/ou cuire des aliments disposées dans les coupelles de cuisson et sur la plaque de cuisson à partir principalement du rayonnement thermique émis par la résistance électrique chauffante.

### Résumé de l'invention

La présente invention vise à remédier à ces inconvénients.

Le problème technique à la base de l'invention consiste notamment à fournir un appareil à raclette qui soit de structure simple et économique et qui présente une efficacité énergétique améliorée, tout en conservant des performances de chauffe et de cuisson satisfaisantes.

A cet effet, la présente invention concerne un appareil à raclette comprenant :
- une sole configurée pour recevoir des coupelles de cuisson, également nommées poêlons, destinées chacune à recevoir au moins un aliment à cuire, par exemple un morceau de fromage à faire fondre, voire d'autres aliments à cuire (lardons, morceaux d'oignons ou de champignons...),
- une résistance électrique chauffante qui est disposée au-dessus et à distance de la sole et qui est configurée pour être située au moins en partie au-dessus des coupelles de cuisson lorsque les coupelles de cuisson reposent sur la sole, et
- une plaque de cuisson configurée pour recouvrir au moins en partie la résistance électrique chauffante, la plaque de cuisson comprenant une face inférieure qui est orientée vers la sole et une face supérieure comprenant une surface de cuisson configurée pour recevoir et chauffer un aliment à cuire, tel que des légumes, des crêpes ou encore de la viande, telle que du bacon,
la face inférieure de la plaque de cuisson comporte une surface de réflexion présentant une émissivité comprise entre 0,60 et 0,80, avantageusement entre 0,65 et 0,80, de façon encore avantageuse entre 0,70 et 0,75 et par exemple d'environ 0,73, la surface de réflexion étant configurée pour réfléchir une partie d'un rayonnement thermique émis par la résistance électrique chauffante vers la sole et donc vers des coupelles de cuisson disposées sur la sole.

Une telle configuration de la face inférieure de la plaque de cuisson permet de renvoyer vers la sole, et donc vers les coupelles de cuisson disposées sur cette dernière, une partie des calories émises par la résistance électrique chauffante et ainsi de maintenir une cuisson optimale des aliments contenus dans les coupelles de cuisson, et en particulier d'assurer une fonte du fromage contenu dans les coupelles de cuisson, tout en réduisant la puissance électrique de la résistance électrique chauffante, et donc tout en réduisant la consommation électrique de l'appareil à raclette.

De plus, une telle valeur d'émissivité pour la surface de réflexion permet à cette dernière d'absorber des calories émises par la résistance électrique chauffante, et donc d'emmagasiner de la chaleur, et ainsi d'assurer une chauffe et une cuisson satisfaisantes d'aliments, tels que du bacon ou des légumes, disposés sur la surface de cuisson prévue sur la plaque de cuisson.

Par conséquent, l'appareil à raclette selon la présente invention assure une cuisson optimale d'aliments disposés dans les différentes coupelles de cuisson et sur la plaque de cuisson, tout en présentant une efficacité énergétique améliorée.

L'appareil à raclette peut en outre présenter une ou plusieurs des caractéristiques suivantes, prises seules ou en combinaison.

Selon un mode de réalisation de l'invention, la surface de réflexion est de couleur grise, et avantageusement de couleur grise claire. Une telle couleur assure une réflexion d'une partie significative du rayonnement thermique, émis par la résistance électrique chauffante, vers la sole, tout en assurant une absorption suffisante de ce rayonnement thermique par la plaque de cuisson de manière à permettre une chauffe et/ou une cuisson satisfaisantes des aliments disposés sur la surface de cuisson.

Selon un mode de réalisation de l'invention, la surface de réflexion présente une couleur située dans la plage de couleur allant de S 5500-N à S 5502-Y dans le nuancier de couleur NCS System^{®}.

Selon un mode de réalisation de l'invention, la surface de réflexion s'étend sur sensiblement l'intégralité de la face inférieure de la plaque de cuisson.

Selon un mode de réalisation de l'invention, la face inférieure de la plaque de cuisson est au moins en partie revêtue, et par exemple intégralement revêtue, d'un revêtement de surface, le revêtement de surface formant la surface de réflexion. De façon avantageuse, le revêtement de surface est de couleur grise, et par exemple de couleur grise claire.

Selon un mode de réalisation de l'invention, la plaque de cuisson comporte une partie de cuisson qui est sensiblement plane et qui comprend la surface de cuisson, et un rebord périphérique qui est configuré pour s'étendre vers le bas depuis un bord périphérique de la partie de cuisson, la surface de réflexion s'étendant au moins en partie sur une face inférieure de la partie de cuisson.

Selon un mode de réalisation de l'invention, la surface de réflexion s'étend au moins en partie sur une face interne du rebord périphérique.

Selon un mode de réalisation de l'invention, l'appareil à raclette comporte une structure de support configurée pour supporter la plaque de cuisson et maintenir la plaque de cuisson à distance de la sole.

Selon un mode de réalisation de l'invention, la structure de support est en outre configurée pour supporter la résistance électrique chauffante.

Selon un mode de réalisation de l'invention, la structure de support comporte plusieurs organes de support, tels que des entretoises métalliques, s'étendant au moins en partie entre la sole et la plaque de cuisson et disposés à distance les uns des autres. De façon avantageuse, les organes de support font saillie d'une face supérieure de la sole.

Selon un mode de réalisation de l'invention, les organes de support, et par exemple les portions supérieures des organes de support, sont configurés pour supporter une portion périphérique de la plaque de cuisson.

Selon un mode de réalisation de l'invention, la résistance électrique chauffante est disposée sous la face inférieure de la plaque de cuisson.

Selon un mode de réalisation de l'invention, la plaque de cuisson est métallique, et par exemple réalisée en aluminium.

Selon un mode de réalisation de l'invention, l'appareil à raclette comporte une chambre de cuisson dans laquelle sont destinées à être logées les coupelles de cuisson, la chambre de cuisson étant délimitée inférieurement, c'est-à-dire vers le bas, par la sole, et étant délimitée supérieurement, c'est-à-dire vers le haut, par la plaque de cuisson. De façon avantageuse, la résistance électrique chauffante est disposée dans une partie supérieure de la chambre de cuisson.

Selon un mode de réalisation de l'invention, l'appareil à raclette comporte un socle configuré pour reposer sur une surface de travail, la sole étant fixée au socle.

Selon un mode de réalisation de l'invention, la structure de support est configurée pour fixer la sole au socle.

Selon un mode de réalisation de l'invention, la sole comporte une pluralité d'empreintes de réception, également nommées cavités de réception, chaque empreinte de réception étant configurée pour recevoir une coupelle de cuisson. La sole peut par exemple comporter six ou huit empreintes de réception.

Selon un mode de réalisation de l'invention, la plaque de cuisson est amovible.

Selon un mode de réalisation de l'invention, la plaque de cuisson est configurée pour envelopper la résistance électrique chauffante de façon à en empêcher l'accès à un utilisateur.

Selon un mode de réalisation de l'invention, la résistance électrique chauffante comporte une partie de connexion configurée pour être reliée électriquement à une source d'alimentation électrique, et une partie de chauffage s'étendant sensiblement parallèlement à la plaque de cuisson. De façon avantageuse, la structure de support est configurée pour maintenir la partie de chauffage à distance de la sole.

Selon un mode de réalisation de l'invention, la partie de chauffage s'étend selon un plan d'extension qui est sensiblement horizontal lorsque le socle repose sur une surface horizontale.

Selon un mode de réalisation de l'invention, la puissance électrique de la résistance électrique chauffante est comprise entre 700W et 800W, et par exemple d'environ 765W.

Selon un autre mode de réalisation de l'invention, la puissance électrique de la résistance électrique chauffante est comprise entre 900W et 1000W, et par exemple d'environ 945W.

### Brève description des figures

La présente invention sera bien comprise à l'aide de la description qui suit en référence aux figures annexées, dans lesquelles des signes de références identiques correspondent à des éléments structurellement et/ou fonctionnellement identiques ou similaires.
Figure 1 est une vue en perspective de dessus d'un appareil à raclette selon la présente invention ;
Figure 2 est une vue partielle en coupe longitudinale de l'appareil à raclette de la figure 1 ;
Figure 3 est une vue éclatée en perspective d'un système de chauffe appartenant à l'appareil à raclette de la figure 1 ;
Figure 4 est une vue en perspective de dessus de la plaque de cuisson de l'appareil à raclette de la figure 1 ;
Figure 5 est une vue en perspective de dessous de la plaque de cuisson de la figure 4.

### Description détaillée

On notera que dans ce document, les termes « horizontal », « inférieur », « supérieur », « au-dessus » et « sous » employés pour décrire l'appareil à raclette font références à l'appareil à raclette en situation d'usage lorsqu'il repose sur une surface qui est plane et horizontale, telle qu'un plan de travail.

A défaut de stipulation contraire, le terme « sensiblement » signifie, dans le présent document, « exactement ou à 10% ou à 10° près ».

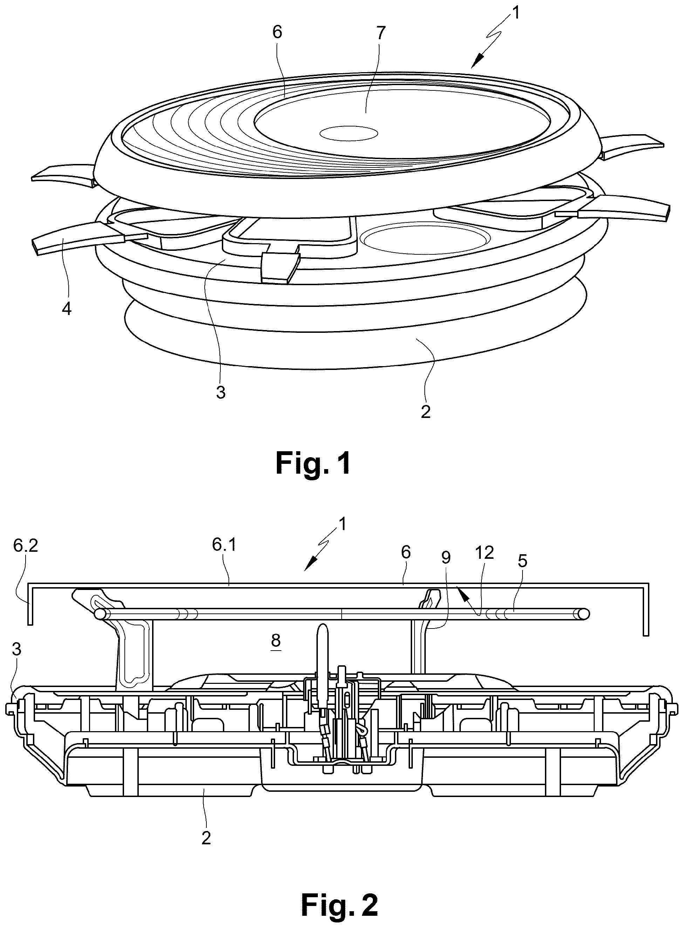

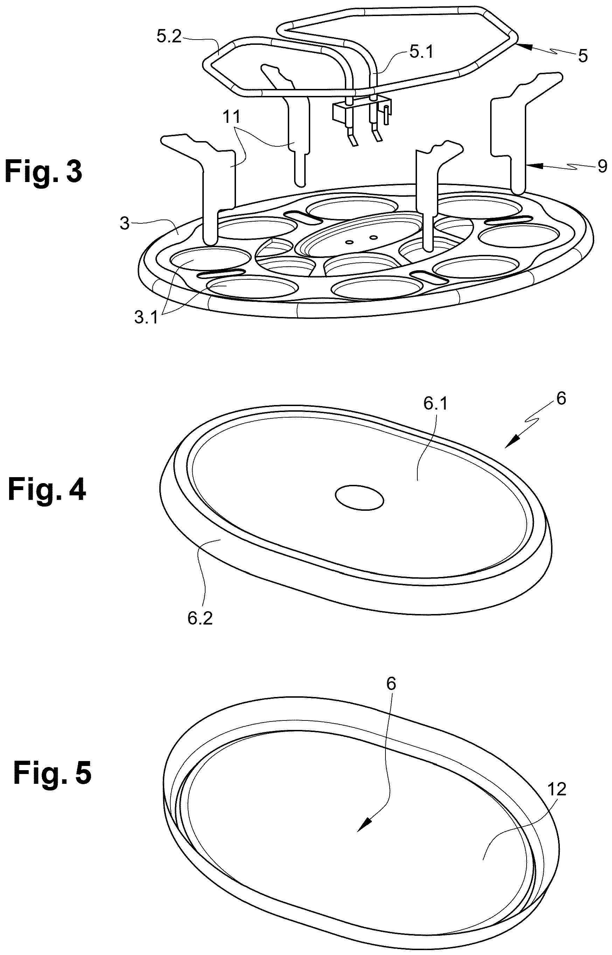

Les figures 1 à 5 représentent un appareil à raclette 1 comprenant un socle 2 configuré pour reposer sur une surface de travail, et une sole 3, par exemple métallique, fixée à une partie supérieure du socle 2. La sole 3 est plus particulièrement configurée pour recevoir des coupelles de cuisson 4, également nommées poêlons, destinées chacune à recevoir au moins un aliment à cuire, par exemple un morceau de fromage à faire fondre, voire d'autres aliments à cuire (lardons, morceaux d'oignons ou de champignons...). La sole 3 comporte avantageusement plusieurs empreintes de réception 3.1, par exemple au nombre de six ou de huit, configurées chacune pour recevoir une coupelle de cuisson 4.

L'appareil à raclette 1 comprend en outre une résistance électrique chauffante 5 qui est disposée au-dessus et à distance de la sole 3, et qui est configurée pour être située au moins en partie au-dessus des coupelles de cuisson 4 lorsque les coupelles de cuisson 4 reposent sur la sole 3.

Selon le mode de réalisation représenté sur les figures, la résistance électrique chauffante 5 comporte une partie de connexion 5.1 configurée pour être reliée électriquement à une source d'alimentation électrique, et une partie de chauffage 5.2 s'étendant selon un plan d'extension qui est configuré pour être sensiblement horizontal lorsque le socle 2 repose sur une surface horizontale.

La puissance électrique de la résistance électrique chauffante 5 peut par exemple être comprise entre 700W et 800W, et être environ égale à 765W, ou peut par exemple être comprise entre 900W et 1000W, et être environ égale à 945W, selon le modèle d'appareil à raclette.

L'appareil à raclette 1 comprend de plus une plaque de cuisson 6, par exemple métallique, configurée pour recouvrir la résistance électrique chauffante 5. De façon avantageuse, la plaque de cuisson 6 est amovible, et est configurée pour envelopper la résistance électrique chauffante 5 de façon à en empêcher l'accès à un utilisateur.

Comme montré sur la figure 2, la plaque de cuisson 6 comprend une face inférieure qui est orientée vers la sole 3 et une face supérieure comprenant une surface de cuisson 7 configurée pour recevoir et chauffer un aliment à cuire.

Selon le mode de réalisation représenté sur les figures, la plaque de cuisson 6 comporte une partie de cuisson 6.1 qui est sensiblement plane et qui comprend la surface de cuisson 7, et un rebord périphérique 6.2 qui est configuré pour s'étendre vers le bas depuis un bord périphérique de la partie de cuisson 6.1. De façon avantageuse, la partie de chauffage 5.2 de la résistance électrique chauffante 5 s'étend sensiblement parallèlement à la plaque de cuisson 6, et plus particulièrement à la partie de cuisson 6.1.

Comme montré sur la figure 2, l'appareil à raclette 1 comporte une chambre de cuisson 8 dans laquelle sont destinées à être logées les coupelles de cuisson 4, la chambre de cuisson 8 étant délimitée inférieurement, c'est-à-dire vers le bas, par la sole 3, et étant délimitée supérieurement, c'est-à-dire vers le haut, par la plaque de cuisson 6. De façon avantageuse, la résistance électrique chauffante 5 est disposée dans une partie supérieure de la chambre de cuisson 8, et par exemple à proximité de la face inférieure de la plaque de cuisson 6.

L'appareil à raclette 1 comprend également une structure de support 9 configurée pour supporter la plaque de cuisson 6 et maintenir la plaque de cuisson 6 à distance de la sole 3. De façon avantageuse, la structure de support 9 est en outre configurée pour supporter la résistance électrique chauffante 5 et pour maintenir la partie de chauffage 5.2 à distance de la sole 3.

Selon le mode de réalisation représenté sur les figures, la structure de support 9 comporte plusieurs organes de support 11, tels que des entretoises métalliques, s'étendant au moins en partie entre la sole 3 et la plaque de cuisson 6 et disposés à distance les uns des autres. Les organes de support 11 sont plus particulièrement configurés pour supporter une portion périphérique de la plaque de cuisson 6. De façon avantageuse, les organes de support 11 font saillie d'une face supérieure de la sole 3 et sont également configurés pour fixer la sole 3 au socle 2.

Selon la présente invention, la face inférieure de la plaque de cuisson 6 comporte une surface de réflexion 12 présentant une émissivité comprise entre 0,60 et 0,80, avantageusement entre 0,65 et 0,80, de façon encore avantageuse entre 0,70 et 0,75 et par exemple d'environ 0,73. Ainsi, la surface de réflexion 12 est plus particulièrement configurée pour réfléchir une partie d'un rayonnement thermique émis par la résistance électrique chauffante 5 vers la sole 3, et donc vers des coupelles de cuisson 4 disposées sur la sole 3.

Selon un mode de réalisation de l'invention, la face inférieure de la plaque de cuisson 6 est au moins en partie revêtue, et par exemple intégralement revêtue, d'un revêtement de surface formant la surface de réflexion 12 précitée. Le revêtement de surface, et donc la surface de réflexion 12, peut par exemple s'étendre sur l'intégralité de la face inférieure de la plaque de cuisson 6, et donc sur l'intégralité de la face inférieure de la partie de cuisson 6.1 et sur l'intégralité de la face interne du rebord périphérique 6.2.

De façon avantageuse, le revêtement de surface, et donc la surface de réflexion 12, est de couleur grise, et de préférence de couleur grise claire de référence S 5500-N dans le nuancier de couleur NCS System^{®}. Selon un mode de réalisation de l'invention, le revêtement de surface, et donc la surface de réflexion 12, présente une couleur située dans la plage de couleur allant de S 5500-N à S 5502-Y dans le nuancier de couleur NCS System^{®}.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Appareil à raclette (1) comprenant :
- une sole (3) configurée pour recevoir des coupelles de cuisson (4) destinées chacune à recevoir au moins un aliment à cuire,
- une résistance électrique chauffante (5) qui est disposée au-dessus et à distance de la sole (3) et qui est configurée pour être située au moins en partie au-dessus des coupelles de cuisson (4) lorsque les coupelles de cuisson (4) reposent sur la sole (3), et
- une plaque de cuisson (6) configurée pour recouvrir au moins en partie la résistance électrique chauffante (5), la plaque de cuisson (6) comprenant une face inférieure qui est orientée vers la sole (3) et une face supérieure comprenant une surface de cuisson (7) configurée pour recevoir et chauffer un aliment à cuire,
**caractérisé en ce que** la face inférieure de la plaque de cuisson (6) comporte une surface de réflexion (12) présentant une émissivité comprise entre 0,60 et 0,80, la surface de réflexion (12) étant configurée pour réfléchir une partie d'un rayonnement thermique émis par la résistance électrique chauffante (5) vers des coupelles de cuisson (4) disposées sur la sole (3).

2. Appareil à raclette (1) selon la revendication 1, dans lequel la surface de réflexion (12) est de couleur grise.

3. Appareil à raclette (1) selon la revendication 1 ou 2, dans lequel la face inférieure de la plaque de cuisson (6) est au moins en partie revêtue d'un revêtement de surface, le revêtement de surface formant la surface de réflexion (12).

4. Appareil à raclette (1) selon l'une quelconque des revendications 1 à 3, dans lequel la plaque de cuisson (6) comporte une partie de cuisson (6.1) qui est sensiblement plane et qui comprend la surface de cuisson (7), et un rebord périphérique (6.2) qui est configuré pour s'étendre vers le bas depuis un bord périphérique de la partie de cuisson (6.1), la surface de réflexion (12) s'étendant au moins en partie sur une face inférieure de la partie de cuisson (6.1).

5. Appareil à raclette (1) selon la revendication 4, dans lequel la surface de réflexion (12) s'étend au moins en partie sur une face interne du rebord périphérique (6.2).

6. Appareil à raclette (1) selon l'une quelconque des revendications 1 à 5, dans lequel la surface de réflexion (12) s'étend sur sensiblement l'intégralité de la face inférieure de la plaque de cuisson (6).

7. Appareil à raclette (1) selon l'une quelconque des revendications 1 à 6, lequel comporte une structure de support (9) configurée pour supporter la plaque de cuisson (6) et maintenir la plaque de cuisson (6) à distance de la sole (3).

8. Appareil à raclette (1) selon la revendication 7, dans lequel la structure de support (9) est en outre configurée pour supporter la résistance électrique chauffante (5).

9. Appareil à raclette (1) selon l'une quelconque des revendications 1 à 8, dans lequel la plaque de cuisson (6) est amovible.
